# EUROPÄISCHE PATENTSCHRIFT

(11) **EP 3 188 892 B1**
(45) Veröffentlichungstag und Bekanntmachung des Hinweises auf die Patenterteilung: **04.01.2023**
(21) Anmeldenummer: 15763844.6
(22) Anmeldetag: 01.09.2015
(51) Int. Cl.: C09J 5/02, C09J 7/10, B32B 38/00, B29C 59/14, B32B 37/00, B32B 37/20

(54) **VERFAHREN ZUR ERHÖHUNG DER ADHÄSION ZWISCHEN DER ERSTEN OBERFLÄCHE EINES ERSTEN BAHNFÖRMIGEN MATERIALS UND EINER ERSTEN OBERFLÄCHE EINES ZWEITEN BAHNFÖRMIGEN MATERIALS**
METHOD FOR INCREASING THE ADHESION BETWEEN THE FIRST SURFACE OF A FIRST WEB-TYPE MATERIAL AND A FIRST SURFACE OF A SECOND WEB-TYPE MATERIAL
PROCÉDÉ D'AUGMENTATION DE L'ADHÉRENCE ENTRE LA PREMIÈRE SURFACE D'UN PREMIER MATÉRIAU EN FORME DE BANDE ET UNE PREMIÈRE SURFACE D'UN DEUXIÈME MATÉRIAU EN FORME DE BANDE

(30) Priorität: 05.09.2014 DE 102014217800
(43) Veröffentlichungstag der Anmeldung: 12.07.2017
(73) Patentinhaber: tesa SE, 22848 Norderstedt (DE)
(72) Erfinder: HÄHNEL, Marcel, 22851 Norderstedt (DE)
(74) Vertreter: tesa SE
(86) Internationale Anmeldenummer: PCT/EP2015/069920
(87) Internationale Veröffentlichungsnummer: WO 2016/034569

(56) Entgegenhaltungen:
- WO-A1-03/024716
- WO-A1-2011/107510
- DE-A1- 4 127 723
- DE-A1-102011 075 470
- DE-A1-102012 220 286
- US-A- 3 959 567
- US-A- 5 676 791

## Beschreibung

Die Erfindung bezieht sich auf ein Verfahren zur Erhöhung der Adhäsion zwischen der ersten Oberfläche eines ersten bahnförmigen Materials und einer ersten Oberfläche eines zweiten bahnförmigen Materials.

Im Bereich der industriellen Fertigung besteht der Bedarf nach einfachen Vorbehandlungstechniken, um die Verklebungseigenschaften eines Fügeteils zu verbessern.
- Typischerweise werden aufwändige Prozesse wie nasschemische Reinigung und Primerung der Fügeteiloberfläche verwendet, um hochfeste Verbindungen mit einem Selbstklebeband zu erzielen.
- Insbesondere die einfachen physikalischen Vorbehandlungstechniken unter Atmosphärendruck (Corona, Plasma, Flamme) werden heute zur Oberflächenbehandlung des Fügeteils zur Erzielung einer höheren Verankerungskraft mit einem Selbstklebeband vorteilhaft eingesetzt.

Zur Verbesserung der Haftungseigenschaften von Fügeteiloberflächen und Haftklebeband können Vorbehandlungen der Oberflächen durchgeführt werden. Diese Vorbehandlungen ermöglichen beziehungsweise stärken die zwischenmolekularen Kräfte der Fügepartner. Es gibt verschiedene Möglichkeiten der Vorbehandlung, dieses sind unter anderem chemische Vorbehandlung mittels Primerauftrag oder physikalische Vorbehandlung mittels Plasma- oder Coronabehandlung.

Das Buch "Kleben - Grundlagen, Technologien, Anwendungen" von G. Habenicht, 2009, Springer Verlag, Berlin/Heidelberg, gibt eine Einführung in die Oberflächenbehandlung.

Die Festigkeit von Klebverbindungen beziehungsweise die Verbindung von Oberfläche zu Haftklebeband kann durch chemische Brücken gestärkt werden. Die Basis dieser chemischen Brücken stellen siliziumorganische Verbindungen (Silane) dar. Sie ermöglichen neben einer erhöhten Festigkeit auch ein verbessertes Alterungsverhalten gegenüber feuchten Atmosphären. Der chemische Primer wird dazu vor der Applikation des Haftklebebandes auf der Oberfläche aufgetragen. Wichtig ist hierbei eine möglichst dünne, teilweise monomolekulare Primerschicht, da die intermolekularen Kräfte zwischen den Silanmolekülen schwach sind. Der bifunktionelle Haftvermittler reagiert im Folgenden mit der Fügeteiloberfläche (Polykondensationsreaktion) und den Klebstoffmolekülen des Haftklebebandes (Polyadditions- oder Polymerisationsreaktion).

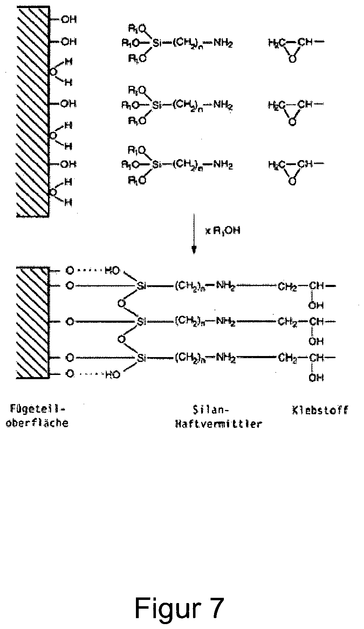

Der Reaktionsmechanismus wird schematisch in der beigefügten Abbildung (siehe Figur 7) dargestellt.

Plasma wird als 4. Aggregatzustand von Materie bezeichnet. Es handelt sich um ein teilweises beziehungsweise vollständig ionisiertes Gas. Durch Energiezufuhr werden positive und negative Ionen, Elektronen, andere angeregte Zustände, Radikale, elektromagnetische Strahlung und chemische Reaktionsprodukte erzeugt. Viele dieser Spezies können zu Veränderungen der zu behandelnden Oberfläche führen. In Summe führt diese Behandlung zu einer Aktivierung der Fügeteiloberfläche, konkret einer höheren Reaktivität.

Diese Behandlung kann sowohl auf der Oberfläche des Fügeteils, als auch auf der Klebmasse durchgeführt werden. Ebenfalls ist eine Kombination beider Behandlungen möglich. Ebenso wird diese Behandlung eingesetzt, um die Adhäsion zwischen der ersten Oberfläche eines ersten bahnförmigen Materials (beispielsweise einer Klebemasse) und einer ersten Oberfläche eines zweiten bahnförmigen Materials (beispielsweise eines Trägermaterials) zu erhöhen.

Die Coronabehandlung, auch Coronaentladung genannt, erfolgt als Hochspannungsentladung mit direktem Kontakt zur Fügeteiloberfläche Durch die Entladung wird Stickstoff der Umgebungsluft in eine reaktive Form überführt. An der Fügeteiloberfläche entstehen durch den Aufprall der auftreffenden Elektronen Molekülspaltungen. Die daraus resultierenden freien Valenzen ermöglichen eine Anlagerung der Reaktionsprodukte der Coronaentladung. Diese Anlagerungen ermöglichen verbesserte Haftungseigenschaften der Fügeteiloberfläche.

Diese Behandlung kann, äquivalent zum Plasma, an Fügeteiloberfläche, Klebmasse des Haftklebebandes und kombiniert an beiden Oberflächen erfolgen.

Sollen zwei oder mehr als zwei Schichten aufeinander laminiert werden, werden typischerweise eine oder beide Grenzflächen vor der Laminierung physikalisch vorbehandelt.

Es ist bekannt, dass die Behandlung mittels Corona und Plasma eine begrenzte Haltbarkeit in Bezug auf die Aktivierung der Grenzschicht hat, so dass zeitnah oder überwiegend direkt vor dem Prozess der Laminierung behandelt wird.

Plasma- und Corona-Vorbehandlungen werden zum Beispiel in der DE 10 2005 027 391 A1 und der DE 103 47 025 A1 vorbeschrieben oder erwähnt.

Die DE 10 2007 063 021 A1 beschreibt eine Aktivierung von Klebmassen mittels einer filamentären Coronabehandlung. Es wird offenbart, dass sich die vorherige Plasma/Corona-Vorbehandlung positiv auf die Scherstandzeit und das Auffließverhalten der Verklebung auswirkt. Es ist nicht erkannt worden, dass das Verfahren eine Erhöhung der Klebkraft bewirken kann.

Wie die DE 10 2007 063 021 A1 beschreibt die DE 10 2011 075 470 A1 die physikalische Vorbehandlung von Klebmasse und Träger/Substrat. Die Vorbehandlungen werden getrennt vor dem Fügeschritt durchgeführt und können gleich- und verschiedenartig ausgelegt sein. Durch die beidseitige Vorbehandlung werden höhere Kleb- und Verankerungskräfte erzielt als nur bei substratseitiger Vorbehandlung.

Bei der DE 24 60 432 A sollen zwei Bahnen durch Einbringen eines plastischen Kunststofffilms, der als Haftvermittlers dient, zu einem Laminat gefügt werden. Das Plasma bildet sich zwischen den zwei Laminierwalzen, die geerdet sind und einer Hochspannungselektrode, die gleichzeitig eine Durchbrechung für den Haftvermittler aufweist, ausgebildet. Die die Walze umströmende Luft soll durch das Plasma in der Form beeinflusst werden, so dass der Haftvermittler nicht zu früh abkühlt und es zu keinen Lufteinschlüssen im Laminat kommt.

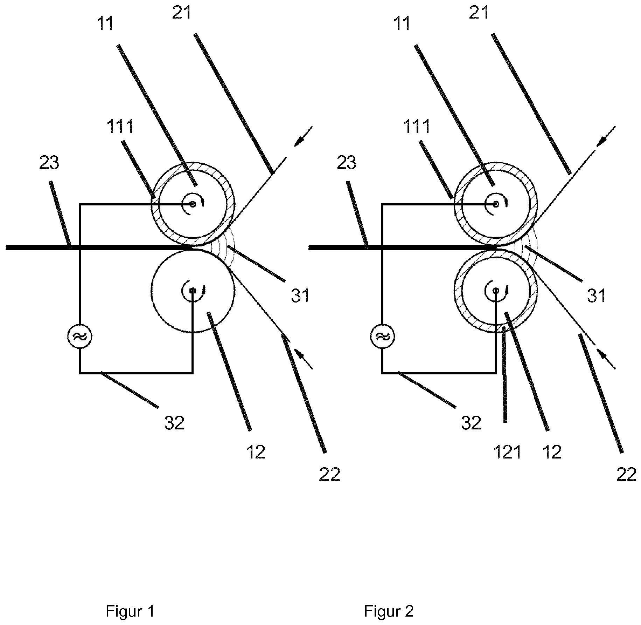

In der DE 27 54 425 A wird auf die DE 24 60 432 A verwiesen. Es werden für die gleiche Aufgabenstellung neue Anordnungen beschrieben. Dabei wird laut Figur 1 das Plasma zwischen den zwei Laminationswalzen ausgebildet, von denen eine dielektrisch belegt ist. Es wird wie auch in DE 24 60 432 A nur die Lamination von Flachfolienbahnen mittels einer thermoplastischen Kunststoffschmelze beschrieben.

In der DE 198 46 814 A1 werden verschiedene Anordnungen beschrieben, die der Aufgabe nach für eine verbesserte Corona-Behandlung der Bahnen vor dem Zusammenkaschieren sorgen. Es wird nur allgemein von Bahnen gesprochen und der Begriff Folien nur in Zusammenhang mit der DE 198 02 662 A1 genannt. Es gibt keine Nennung von Klebmassen.

Hier wird ebenfalls das Plasma nach Anspruch 2 zwischen zwei Kaschierwalzen ausgebildet. Das Dielektrikum wird durch mindestens ein mitlaufendes Band gebildet.

Die DE 41 27 723 A1 beschreibt die Herstellung von mehrschichtigen Laminaten von Kunststofffolienbahnen und Kunststoffplatten, bei denen mindestens eine Fügeseite mit einer Aerosolcorona direkt vor dem Fügeschritt behandelt wird. Laut Abbildung 1 kann diese strömungsgetriebene Corona auch direkt auf den Laminationsspalt gerichtet sein. Es kommen als Aerosol Monomere, Dispersionen, kolloidale Systeme, Emulsionen oder Lösungen in Betracht.

In der DE 10 2012 220 286 A1 wird ein Verfahren zur Erhöhung der Adhäsion zwischen einer Haftklebemassenschicht, die eine einem Substrat abgewandte und eine dem Substrat zugewandte Oberfläche aufweist, und der Oberfläche eines Substrats bekannt, wobei die dem Substrat zugewandte Oberfläche der Haftklebemassenschicht und die Oberfläche des Substrats, die mit der Haftklebemassenschicht bedeckt ist, jeweils mit Atmosphärendruckplasma behandelt werden.

Die WO 03/024716 A1 beschreibt ein Verfahren zur Herstellung einer mehrschichtigen Folienbahn durch Zusammenfügen von mindestens zwei Folienbahnen und/oder mindestens einer Folienbahn und mindestens einem Beschichtungsmaterial, wobei mindestens eine Folienbahn und/oder mindestens ein Beschichtungsmaterial auf der Fügeseite mit einem indirekten atmosphärischen Plasmatron behandelt wird und dem Plasmatron ein Arbeitsgas zugeführt wird

Die US 3,959,567 A offenbart ein Verfahren zur Verbindung von bahnförmigen Materialien oder Filmen aus thermoplastischen Harzen wie Polyethylen oder Ethylen-Vinyl-Acetat-Copolymer (EVA). Dies sind nicht haftklebrige Schichten.

Die WO 2011/107510 A1 offenbart ein Verfahren zur Herstellung eines mehrschichtigen Verpackungsmaterials, bei dem ein Schmelzkleber bereitgestellt wird, bei dem der Schmelzkleber aufgeschmolzen wird, bei dem der Schmelzkleber auf ein erstes Verpackungsmaterial aufgebracht wird und bei dem auf den Schmelzkleber ein zweites Verpackungsmaterial aufgebracht wird. Der Schmelzkleber hat dabei keine haftklebrigen Eigenschaften.

Der Stand der Technik zeichnet sich dadurch aus, dass sich die Vorbehandlungen überwiegend auf das Trägermaterial oder das Fügeteil beziehen, um eine höhere Verankerungskraft zum Klebstoff oder zum Selbstklebeband aufzubauen.

Zwar können durch entsprechende Plasma-/Corona-Behandlungen die Verankerungskräfte klar gegenüber unbehandelten Fügepartnern gesteigert werden, jedoch stößt man bei vielen Systemen, die nicht in den Kohäsionsbruch gehen, auf eine Art von Grenze, die sich mit den bisherigen Corona- und Plasmasystemen nicht überkommen lässt.

Wie im Rahmen dieser Erfindung festgestellt worden ist, liegt dies in der Natur der Klebmassen und ihrer Interaktion mit den Substraten begründet. Eine Wechselwirkung erfolgt hier meist über Ladungen oder funktionelle Gruppen. Diese funktionellen Gruppen werden durch Plasmavorbehandlung auf den Oberflächen erzeugt und sind in ihrer Art vielfältig und verschieden. Sie entstehen im Wesentlichen unmittelbar nach Beendigung des Kontakts von Plasma und Oberfläche durch Reaktionen mit Luftsauerstoff. Eine Steuerung dieser Gruppen kann zum Teil und in engen Grenzen durch die verwendeten Prozessgase und Prozessmodi erfolgen. Eine deutliche Steigerung ist dem entsprechend nur möglich, wenn kovalente Bindungen zwischen den Fügepartner erzeugt werden können.

Hieraus ergibt sich die Fragestellung, ob man durch eine geeignete Verfahrensführung diese kovalenten Bindungen erzeugen kann, ohne dass zuvor die Radikale auf den behandelten Oberflächen mit gasförmigen Komponenten abreagieren.

Aufgabe der Erfindung ist es, die angegebenen positiven Effekte bei physikalischer Oberflächenmodifikation von Haftklebmassen und Trägermaterialien zu finden, um hochfeste Verbindungen zu erreichen. Kern der Aufgabe ist die Erzielung einer hohen Verankerung zwischen der haftklebrigen Schicht und des Trägermaterials.

Gelöst wird diese Aufgabe durch ein Verfahren, wie es gemäß Hauptanspruch dargestellt ist. Gegenstand der Unteransprüche sind dabei vorteilhafte Weiterbildungen des Erfindungsgegenstands.

Demgemäß betrifft die Erfindung ein Verfahren zur Erhöhung der Adhäsion zwischen der ersten Oberfläche eines ersten bahnförmigen Materials und einer ersten Oberfläche eines zweiten bahnförmigen Materials, wobei
- das erste bahnförmige Material und das zweite bahnförmige Material kontinuierlich und mit gleicher Bahnrichtung einem Laminierspalt zugeführt werden, in dem das erste bahnförmige Material und das zweite bahnförmige Material mit jeweils ihrer ersten Oberfläche zusammenlaminiert werden,
- beide erste Oberflächen des ersten bahnförmigen Materials und des zweiten bahnförmigen Materials vollflächig mit einem Plasma behandelt werden, und zwar derart, dass das Plasma beginnend vor dem Laminierspalt bis in den Laminierspalt hinein kontinuierlich auf die beiden ersten Oberflächen einwirkt,
- der Laminierspalt von einer Druckwalze und einer Gegendruckwalze gebildet wird, die einen Gegendruck aufbaut, und
- zumindest eine der Mantelflächen der Walzen oder beide mit einem Dielektrikum ausgerüstet sind.

Das erste bahnförmige Material besteht aus einer Haftklebemassenschicht.

Die Haftklebemassenschicht besteht aus reinem Acrylat oder mehrheitlich aus Acrylat (mit einem thermischen Vernetzersystem und/oder Hotmelt und/oder UV-vernetztem und/oder UV-polymerisiertem)

Die Haftklebemassenschicht bildet ein trägerloses, einschichtiges, beidseitig klebendes Klebeband.

Erfindungswesentlich ist, dass sich das Plasma bis an die Linie, wo die beiden bahnförmigen Materialien zusammenlaminiert werden, erstreckt.

Im Rahmen der Erfindung wird klar zwischen einer Corona- und einer Plasmabehandlung unterschieden. Wenn im Folgenden eine Plasmabehandlung erwähnt, ist auch tatsächlich nur eine solche gemeint.

Das erste und das zweite bahnförmige Material laufen dabei mit gleicher Bahnrichtung in den Laminierspalt.

Da das Plasma im Laminierspalt ausgebildet ist, werden das erste bahnförmige Material und das zweite bahnförmige Material mit jeweils ihrer ersten Oberfläche im Plasma zusammenlaminiert.

Gemäß einer ersten bevorzugten Ausführungsform der Erfindung legt ein beliebiger Punkt auf der mit Plasma behandelten Oberfläche des ersten bahnförmigen Materials und/oder des zweiten bahnförmigen Materials den Weg vom Beginn der Plasmabehandlung bis in den Laminierspalt in einer Zeitspanne weniger als 2,0 s, vorzugsweise weniger als 1,0 s, weiter vorzugsweise weniger als 0,5 s zurück. Auch Zeiten von weniger als 0,5 s, vorzugsweise weniger als 0,3 s, weiter vorzugsweise weniger als 0,1 s sind erfindungsgemäß möglich.

Gemäß einer Variante der Erfindung wird ein drittes bahnförmiges Material dem Laminierspalt so zugeführt, dass das zweite bahnförmige Material zwischen erstem und drittem bahnförmigen Material liegt.

Die Bahnrichtung des dritten bahnförmigen Materials ist die selbe wie die, die das erste und das zweite bahnförmige Material zeigen.

In einer weiteren Variante der Erfindung werden dem Laminierspalt neben dem ersten und dem zweiten bahnförmigen Material eine Vielzahl von weiteren bahnförmigen Materialien zugeführt, wobei Zuführung so erfolgt, dass die einzelnen bahnförmigen Materialien zwischen dem ersten und dem zweiten bahnförmigen Material in den Laminierspalt eintreten. Die einzelnen weiteren bahnförmigen Materialien werden so gewählt, dass in dem Laminierspalt nie eine nichtklebende Trägerschicht und eine zweite nichtklebende Trägersicht direkt aufeinander laminiert werden.

Der Laminierspalt wird von einer Druckwalze und von einer Gegendruckwalze gebildet, die den zur Lamination gewünschten einen Gegendruck aufbaut. Bevorzugt laufen die Walzen gegenläufig, weiter vorzugsweise mit der identischen Umfangsgeschwindigkeit.

Im Laminierspalt sind die Umfangsgeschwindigkeit und die Drehrichtung der Walzen identisch mit der Bahngeschwindigkeit und Bahnrichtung des ersten und des zweiten bahnförmigen Materials. Gegebenenfalls vorhandene weitere Bahnen weisen weiter vorzugsweise ebenfalls identische Bahngeschwindigkeit und Bahnrichtung auf.

Die Walzen weisen vorzugsweise den selben Durchmesser auf, weiter vorzugsweise liegt der Durchmesser zwischen 50 bis 500 mm. Vorteilhafterweise ist die Mantelfläche der Walzen glatt, und zwar insbesondere geschliffen.

Die Oberflächenrauigkeit der Walzen ist vorzugsweise Rₐ ist kleiner 50 µm, vorzugsweise kleiner 10 µm. "Rₐ" eine Einheit für den Industriestandard für die Qualität der Oberflächenendbearbeitung und stellt die durchschnittliche Höhe der Rauheit dar, insbesondere die durchschnittliche Absolutentfernung von der Mittellinie des Rauheitsprofils innerhalb des Auswertungsbereichs.

Die Walzenoberfläche der nicht mit einem Dielektrikum belegten Walze kann aus Stahl, Edelstahl oder verchromten Stahl bestehen. Die Oberfläche kann auch vernickelt oder vergoldet sein. Sie sollte nur elektrisch leitfähig sein und unter Plasmaeinwirkung auch bleiben. Die Oberfläche sollte keine Korrosion unter Plasmaeinwirkung zeigen.

Weiterhin ist es möglich, eine oder beide Walzen mit Öl, Wasser, Dampf, elektrisch oder anderen Temperiermedien in einem bevorzugten Bereich von -40 °C bis 200 °C zu kühlen oder zu beheizen. Bevorzugt sind beide Walzen unbeheizt.

Für die Schicht des Dielektrikums, das die gesamte Mantelfläche (auch vereinfachend Oberfläche genannt) einer oder beider Walzen bedeckt, also über den gesamten Umfang der Walze(n), werden bevorzugt Keramik, Glas, Kunststoffe, Gummi wie Styrol-Butadien-Kautschuke, Chloropren-Kautschuke, Butadien-Kautschuke (BR), Acrylnitril-Butadien-Kautschuke (NBR), Butylkautschuke (IIR), Ethylen-Propylen-Dien-Kautschuke (EPDM) und Polyisopren-Kautschuke (IR) oder Silikon gewählt.

Das Dielektrikum umschließt die Walze(n) fest, kann aber ablösbar sein, beispielsweise in Form zweier Halbschalen.

Die Dicke der Schicht des Dielektrikums auf der oder den Walzen beträgt vorzugsweise zwischen 1 bis 5 mm.

Erfindungsgemäß ist vorgesehen, dass das Dielektrikum keine mitlaufende Bahn ist, die die Mantelfläche eine der Walzen nur abschnittsweise bedeckt (beziehungsweise zwei mitlaufenden Bahnen, die Mantelflächen beider Walzen nur abschnittsweise bedecken).

Gemäß einer bevorzugten Variante ist nur eine Walze des Walzenpaares, die den Laminierspalt bildet, mit einem Dielektrikum belegt.

Gemäß einer bevorzugten Variante sind beide Walzen des Walzenpaares, die den Laminierspalt bildet, mit einem Dielektrikum belegt.

Vorzugsweise wird das Plasma zwischen einer oder mehrerer Düsen und den Walzen erzeugt, bevorzugt bei Betrieb mit Druckluft oder N₂.

Die Plasma-Behandlung findet bei einem Druck statt, welcher nahe am (+/- 0,05 bar) oder bei Atmosphärendruck liegt.

Die Plasma-Behandlung kann in verschiedenen Atmosphären stattfinden, wobei die Atmosphäre auch Luft umfassen kann. Die Behandlungsatmosphäre kann eine Mischung verschiedener Gase sein, ausgewählt unter anderem aus N₂, O₂, H₂, CO₂, Ar, He, Ammoniak, wobei zudem Wasserdampf oder andere Bestandteile beigemischt sein können. Durch diese beispielhafte Auflistung wird keine Einschränkung vorgenommen.

Gemäß einer vorteilhaften Ausführungsform der Erfindung bilden folgende reine oder Mischungen von Prozessgasen eine Behandlungsatmosphäre: N₂, Druckluft, O₂, H₂, CO₂, Ar, He, Ammoniak, Ethylen, Siloxane, Acrylsäuren und/oder Lösungsmittel, wobei zudem Wasserdampf oder andere flüchtige Bestandteile zugesetzt sein können. Bevorzugt werden N₂ und Druckluft.

Das Atmosphärendruckplasma kann mit einer Mischung aus Prozessgasen gebildet werden, wobei die Mischung vorzugsweise zumindest 90 Vol.-% Stickstoff und zumindest ein Edelgas, vorzugsweise Argon, enthält.

Gemäß einer bevorzugten Ausführungsform der Erfindung besteht die Mischung aus Stickstoff und zumindest einem Edelgas, weiter vorzugsweise besteht die Mischung aus Stickstoff und Argon.

Grundsätzlich kann man der Atmosphäre auch beschichtende oder polymerisierende Bestandteile beimischen, als Gas (zum Beispiel Ethylen) oder Flüssigkeiten (vernebelt als Aerosol). Es ist fast keine Einschränkung der in Frage kommenden Aerosole gegeben. Besonders die indirekt arbeitenden Plasmatechniken sind für den Einsatz von Aerosolen geeignet, da hier keine Verschmutzung der Elektroden droht.

Deren Anteil sollte aber 5 Vol.-% nicht überschreiten.

Für die Erzeugung des Plasmas und das Einwirken auf die bahnförmigen Materialien sind grundsätzlich alle genannten Düsentypen geeignet, sofern das Plasma kontinuierlich bis in den Laminierspalt einwirkt.

Eine mögliche Variante der Plasmabehandlung ist die Verwendung eines feststehenden Plasmastrahls.

Eine ebenfalls mögliche Plasmabehandlung verwendet eine Anordnung von mehreren Düsen, versetzt, wenn nötig, zur lückenlosen, teilweise überlappenden Behandlung in hinreichender Breite. Hierbei können rotierende oder nicht-rotierende Runddüsen eingesetzt werden.

Linearelektroden mit Gasaustrittsöffnung sind besonders geeignet, die sich vorteilhaft über die gesamte Länge des Laminierspalts erstrecken.

Weiter vorzugsweise weisen diese über die gesamte Länge des Laminierspalts einen konstanten Abstand zum Laminierspalt auf.

Gemäß einer weiteren Variante brennt das Plasma zwischen der Kante einer metallischen Platte, einem metallischen Stab oder einem metallischen Draht und der oder den dielektrisch belegten Walzen.

Auch hierbei ist bevorzugt, wenn die Kante der Platte, der Stab oder der Draht parallel zum Laminierspalt ausgerichtet sind.

Weiter bevorzugt ist der Plasmaerzeuger bis auf die äußere, zum Laminierspalt deutende Kante mit einem Isolator abgedeckt.

Gemäß einer weiteren vorteilhaften Ausführungsform der Erfindung beträgt der Behandlungsabstand des Plasmaerzeugers zum Laminierspalt 1 bis 100 mm, bevorzugt 3 bis 50 mm, besonders bevorzugt 4 bis 20 mm.

Weiter vorzugsweise kann der Plasmaerzeuger senkrecht zu der Ebene, die ihrerseits senkrecht zu der von den Walzenachsen aufgespannten Ebene liegt, in der Höhe verschoben werden, vorzugsweise gleichzeitig in der Höhe und im Abstand zum Laminierspalt.

Weiter vorzugsweise liegt die Geschwindigkeit, mit der die Bahnen in den Laminierspalt geführt werden, zwischen 0,5 bis 200 m/min, bevorzugt 1 bis 50 m/min, besonders bevorzugt 2 bis 20 m/min (jeweils einschließlich der angegebenen Randwerte der Bereiche).

Gemäß einer vorteilhaften Ausführungsform der Erfindung sind die Bahngeschwindigkeiten der ersten, zweiten, dritten oder sonstigen Bahn alle gleich.

Erfindungsgemäß ist das erste bahnförmige Material ein "Transferklebeband", das heißt ein Klebeband ohne Träger. Einschichtige doppelseitig klebende Selbstklebebänder, so genannte Transfertapes, sind so aufgebaut, dass die die einzige Schicht bildende Haftklebeschicht keinen Träger enthält und nur mit entsprechenden Trennmaterialien, zum Beispiel silikonisierten Trennpapieren oder Trennfolien, abgedeckt ist.

Ein Liner (Trennpapier, Trennfolie) ist nicht Bestandteil eines Klebebandes oder Etiketts, sondern nur ein Hilfsmittel zu deren Herstellung, Lagerung oder für die Weiterverarbeitung durch Stanzen. Darüber hinaus ist ein Liner im Gegensatz zu einem Klebebandträger nicht fest mit einer Klebstoffschicht verbunden.

Das erste bahnförmige Material besteht aus einer Haftklebemasse, also eine Klebemasse, die bereits unter relativ schwachem Andruck eine dauerhafte Verbindung mit fast allen Haftgründen erlaubt und nach Gebrauch im Wesentlichen rückstandsfrei vom Haftgrund wieder abgelöst werden kann. Eine Haftklebemasse wirkt bei Raumtemperatur permanent haftklebrig, weist also eine hinreichend geringe Viskosität und eine hohe Anfassklebrigkeit auf, so dass sie die Oberfläche des jeweiligen Klebegrunds bereits bei geringem Andruck benetzt. Die Verklebbarkeit der Klebemasse beruht auf ihren adhäsiven Eigenschaften und die Wiederablösbarkeit auf ihren kohäsiven Eigenschaften.

Die Haftklebemassenschicht besteht aus reinem Acrylat oder mehrheitlich aus Acrylat.

Die Haftklebemasse kann zur Verbesserung der Klebeeigenschaften mit Klebrigmachern abgemischt sein.

Als Klebrigmacher, auch als Klebharze bezeichnet, sind prinzipiell alle bekannten Stoffklassen geeignet. Klebrigmacher sind beispielsweise Kohlenwasserstoffharze (zum Beispiel Polymere auf Basis ungesättigter C₅- oder Cg-Monomere), Terpenphenolharze, Polyterpenharze auf Basis von Rohstoffen wie zum Beispiel α- oder β-Pinen, aromatische Harze wie Cumaron-Inden-Harze oder Harze auf Basis Styrol oder α-Methylstyrol wie Kolophonium und seine Folgeprodukte, zum Beispiel disproportioniertes, dimerisiertes oder verestertes Kolophonium, zum Beispiel Umsetzungsprodukte mit Glycol, Glycerin oder Pentaerythrit, um nur einige zu nennen. Bevorzugt werden Harze ohne leicht oxidierbare Doppelbindungen wie Terpenphenolharze, aromatische Harze und besonders bevorzugt Harze, die durch Hydrierung hergestellt sind wie zum Beispiel hydrierte Aromatenharze, hydrierte Polycyclopentadienharze, hydrierte Kolophoniumderivate oder hydrierte Polyterpenharze.

Bevorzugt sind Harze auf Basis von Terpenphenolen und Kolophoniumestern. Ebenfalls bevorzugt sind Klebharze mit einem Erweichungspunkt oberhalb von 80 °C gemäß ASTM E28-99 (2009). Besonders bevorzugt sind Harze auf Basis von Terpenphenolen und Kolophoniumestern mit einem Erweichungspunkt oberhalb von 90 °C gemäß ASTM E28-99 (2009). Typische Einsatzmengen sind 10 bis 100 Gewichtsteile bezogen auf Polymere der Klebemasse.

Zur weiteren Verbesserung der Kabelverträglichkeit kann die Klebmasseformulierung optional mit Lichtschutz- oder primären und/oder sekundären Alterungsschutzmitteln abgemischt sein.

Zur Verbesserung der Verarbeitungseigenschaften kann die Klebmasseformulierung weiterhin mit üblichen Prozesshilfsmitteln wie Entschäumern, Entlüftern, Netzmitteln oder Verlaufsmitteln abgemischt sein. Geeignete Konzentrationen liegen im Bereich von 0,1 bis zu 5 Gewichtsteilen bezogen auf die Feststoffe.

Weiter vorzugsweise handelt es sich beim zweiten bahnförmigen Material um ein Trägermaterial.

Als Trägermaterial werden vorliegend bevorzugt Polymerfolien oder Folienverbunde eingesetzt. Derartige Folien/Folienverbunde können aus allen gängigen zur Folienherstellung verwendeten Kunststoffen bestehen, beispielhaft aber nicht einschränkend erwähnt seien:
Polyethylen, Polypropylen - insbesondere das durch mono-oder biaxiale Streckung erzeugte orientierte Polypropylen (OPP), Cyclische Olefin Copolymere (COC), Polyvinylchlorid (PVC), Polyester - insbesondere Polyethylenterephthalat (PET) und Poylethylennaphtalat (PEN), Ethylenvinylalkohol (EVOH), Polyvinylidenchlorid (PVDC), Polyvinylidenfluorid (PVDF), Polyacrylnitril (PAN), Polycarbonat (PC), Polyamid (PA), Polyethersulfon (PES) oder Polyimid (PI).

Diese Materialien werden auch bevorzugt als Trägerschicht in dem ersten bahnförmigen Material eingesetzt, sofern in diesem ein Träger vorhanden ist.

Trägermaterial im Sinne der Erfindung umfasst insbesondere alle flächigen Gebilde, beispielsweise in zwei Dimensionen ausgedehnte Folien oder Folienabschnitte, Bänder mit ausgedehnter Länge und begrenzter Breite.

Gemäß einer weiteren bevorzugten Variante der Erfindung ist das zweite bahnförmige Material viskoelastisch.

Eine viskoelastische Polymerschicht kann als sehr hochviskose Flüssigkeit angesehen werden, die unter Druckbelastung das Verhalten des Fließens (auch als "Kriechen" bezeichnet) zeigt. Solche viskoelastischen Polymere beziehungsweise eine solche Polymerschicht besitzen in besonderem Maße die Fähigkeit, bei langsamer Krafteinwirkung die auf sie einwirkenden Kräfte zu relaxieren. Sie sind in der Lage, die Kräfte in Schwingungen und/oder Verformungen (die insbesondere auch - zumindest zum Teil - reversibel sein können) zu dissipieren, somit die einwirkenden Kräfte "abzupuffern", und eine mechanische Zerstörung durch die einwirkenden Kräfte bevorzugt zu vermeiden, vorteilhaft aber mindestens zu verringern oder aber den Zeitpunkt des Eintretens der Zerstörung zumindest hinauszögern. Im Falle einer sehr schnell einwirkenden Kraft zeigen viskoelastische Polymere üblicherweise ein elastisches Verhalten, also das Verhalten einer vollständig reversiblen Verformung, wobei Kräfte, die über das Elastizitätsvermögen der Polymere hinausgehen, zu einem Bruch führen können. Im Gegensatz hierzu stehen elastische Materialien, die auch bei langsamer Krafteinwirkung das beschriebene elastische Verhalten zeigen. Durch Beimischungen, Füllstoffe, Schäumung oder ähnliches können solche viskoelastischen Massen in ihren Eigenschaften noch stark variiert werden.

Aufgrund der elastischen Anteile der viskoelastischen Polymerschicht, die wiederum wesentlich zu den klebtechnischen Eigenschaften von Klebebändern mit solch einer viskoelastischen Trägerschicht beitragen, kann die Spannung zum Beispiel einer Zug- oder Scherbeanspruchung nicht komplett relaxieren. Dies wir durch das Relaxationsvermögen ausgedrückt, welches definiert ist als ((Spannung(t=0) - Spannung (t)/ Spannung (t=0))*100%. Typischerweise zeigen viskoelastische Trägerschichten ein Relaxationsvermögen von mehr als 50 % auf.

Besonders bevorzugt dienen expandierbare Mikroballons zur Schäumung.

Bei Mikroballons handelt es sich um elastische Hohlkugeln, die eine thermoplastische Polymerhülle aufweisen. Diese Kugeln sind mit niedrigsiedenden Flüssigkeiten oder verflüssigtem Gas gefüllt. Als Hüllenmaterial finden insbesondere Polyacrylnitril, PVDC, PVC oder Polyacrylate Verwendung. Als niedrigsiedende Flüssigkeit sind insbesondere Kohlenwasserstoffe der niederen Alkane, beispielsweise Isobutan oder Isopentan geeignet, die als verflüssigtes Gas unter Druck in der Polymerhülle eingeschlossen sind

Das zweite bahnförmige Material kann auch eine Klebemasse sein oder diese enthalten.

Weiter vorzugsweise weist das das dritte bahnförmige Material eine Klebemassensicht auf oder besteht aus dieser, weiter vorzugsweise handelt es sich bei der Klebemasse um eine Haftklebemasse.

Als (Haft-)Klebemassen können alle Klebemassen verwendet werden, wie sie oben genannt sind.

Gemäß einer besonders vorteilhaften Ausführungsform der Erfindung wird ein dreischichtiges Produkt zusammenlaminiert. Auf einen klebenden oder nicht klebenden Schaumträger auf Acrylatbasis (zweites bahnförmiges Material) werden beidseitig Haftklebemassen (erstes und drittes bahnförmiges Material) auflaminiert.

Erfindungsgemäß ist nicht ausgeschlossen, dass einige oder sämtliche der am Verfahren beteiligten Oberflächen schon einer ersten physikalischen Vorbehandlung (gegebenenfalls auch einer Plasmabehandlung) unterzogen worden sind.

Schließlich ist es erfindungsgemäß nicht ausgeschlossen, wenn zwischen der zweiten Oberfläche des ersten bahnförmigen Materials und/oder der zweiten Oberfläche des zweiten bahnförmigen Materials und/oder der zweiten Oberfläche des dritten zweiten bahnförmigen Materials sowie der Zylinderfläche einer beziehungsweise der Zylinderflächen beider Walzen eine weitere beziehungsweise zwei weitere Bahnen geführt werden, die gegebenenfalls wiederverwertbar sind. Diese dienen dazu, Schädigungen an dem ersten und/oder dem zweiten und/oder dem dritten bahnförmigen Material zu reduzieren.

Das erfindungsgemäß gestellte Problem wird in der Form gelöst, dass die Plasmabehandlung und die Lamination gleichzeitig stattfinden. Dazu wird das Plasma im Laminationsspalt ausgebildet. Die durch das Plasma auf der Oberfläche des Trägers sowie der Oberfläche der Klebmasse erzeugten Radikale können nicht mit Luftsauerstoff abreagieren und können somit nicht mit dem Gegenpart interagieren, da die Zeit zwischen Erzeugung und Lamination gegen null geht. Somit ergeben sich deutliche nicht zuvor erwartete Klebkraftsteigerungen, die auch nicht durch getrennte Vorbehandlungen erreichbar sind.

Das Verfahren kann über einen weiten Bereich von Haftklebemassen und Trägermaterialien eine Steigerung der Klebkraft zwischen den Schichten erzielen.

Das Verfahren ist robust und nicht abhängig von einer optimierten Behandlung für jede Masse und/oder von einer optimierten Behandlung für jedes Trägermaterial.

Der Effekt durch das gelehrte Verfahren ist synergistisch, also mehr als die Summe der Einzeleffekte der Behandlung von Trägermaterial oder Klebemasse.

Es können durch die Erfindung in einem Klebeband folgende wünschenswerte Eigenschaften vereint werden:
∘ High Peel Strength
∘ High Initial Adhesion
∘ High Shear Resistance
∘ High Temperature Resistance
∘ Eignung für Trägermaterialien mit Low Surface Energy (LSE)

Mehrere Figuren zeigen vorteilhafte Varianten des erfindungsgemäßen Verfahrens, ohne damit eine wie auch immer geartete Einschränkung hervorrufen zu wollen.

Es zeigen die Figuren vorteilhafte Ausführungsformen des Verfahrens, ohne damit die Erfindung in irgendeiner Form beschränken zu wollen.

In der Figur 1 ist ein Laminierspalt gezeigt, der von einer Druckwalze 11 und von einer Gegendruckwalze 12 gebildet wird, die den zur Lamination gewünschten Gegendruck aufbaut. Die gleichgroßen Walzen 11, 12 laufen gegenläufig, und zwar mit der identischen Umfangsgeschwindigkeit.

Auf der Druckwalze 11 ist eine Schicht eines Dielektrikums 111 vorhanden.

Aufgrund der Spannung 32 zwischen den Walzen 11, 12 bildet sich im Laminierspalt ein Plasma 31 aus.

Dem Laminierspalt werden ein erstes bahnförmiges Material 21 und ein zweites bahnförmiges Material 22 kontinuierlich und mit gleicher Bahnrichtung zugeführt. In diesem werden das erste bahnförmige Material 21 und das zweite bahnförmige Material 22 mit jeweils ihrer ersten Oberfläche zusammenlaminiert, so dass ein Laminat 23 entsteht. Das erste bahnförmige Material 21 ist eine Schicht aus Klebemasse, das zweite bahnförmige Material 22 ein Träger.

Beide erste Oberflächen des ersten bahnförmigen Materials 21 und des zweiten bahnförmigen Materials 22 werden vollflächig mit einem Plasma 31 behandelt, und zwar derart, dass das Plasma 31 beginnend vor dem Laminierspalt bis in den Laminierspalt hinein kontinuierlich auf die beiden ersten Oberflächen einwirkt.

Figur 2 unterscheidet sich von Figur 1 dadurch, dass beide Walzenoberflächen mit jeweils einem Dielektrikum 111, 121 ausgerüstet sind.

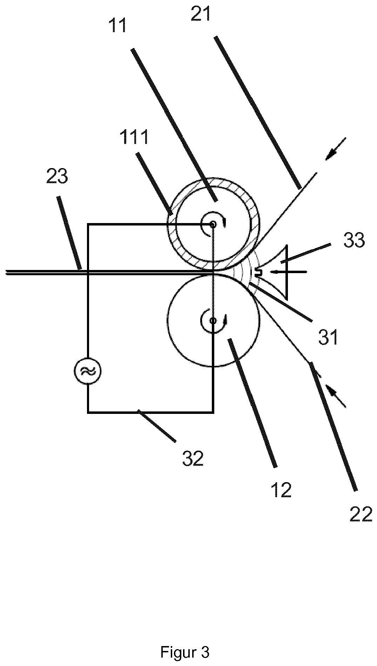

Figur 3 unterscheidet sich von Figur 1 dadurch, dass eine Düse 33, die aus Kunststoff sein kann, vorhanden ist. Diese Düse 33 dient lediglich zur Gaszufuhr in das Plasma 31, beispielsweise von Stickstoff.

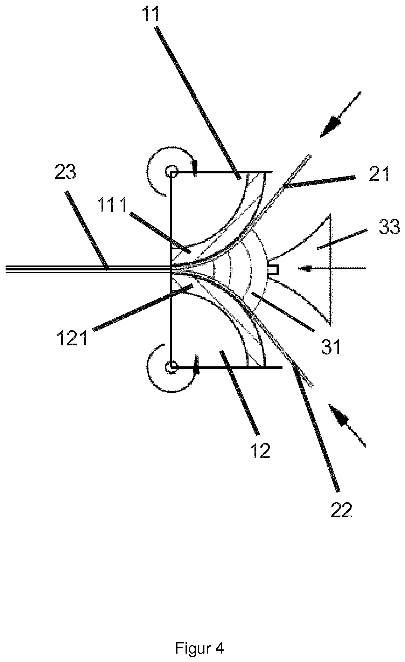

Figur 4 stellt einen vereinfachten Ausschnitt von Figur 3 dar, in dem von den Walzen 11, 12 nur ein Viertel gezeigt ist. Beide Walzenoberflächen sind mit jeweils einem Dielektrikum 111, 121 ausgerüstet.

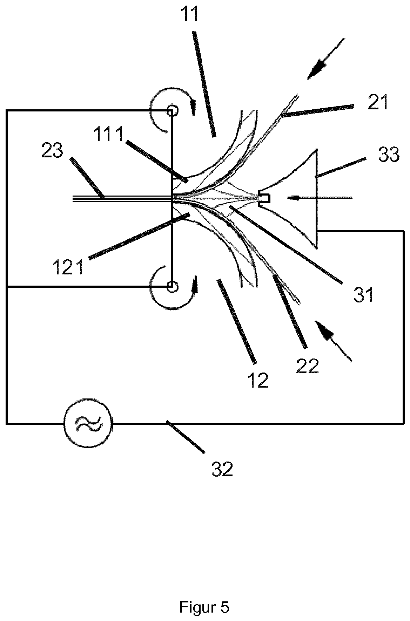

In Figur 5 ist gezeigt, dass das Plasma 31 von der Lineardüse 33 erzeugt wird aufgrund der Spannung 32 zwischen den Walzen 11, 12 und der Düse 33.

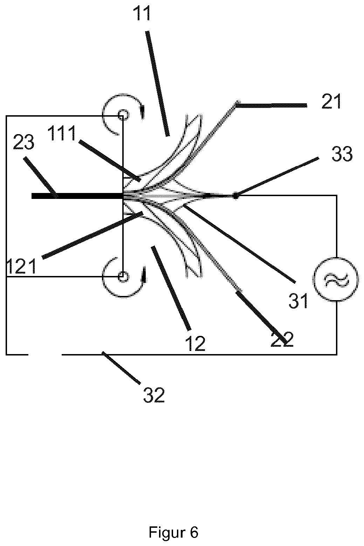

In Figur 6 ist die Düse 33 aus Figur 5 durch einen metallischen Draht 33 ersetzt, der parallel zum Laminierspalt verläuft.

### Prüfmethoden

### Klebkraft im T-Peel

Die Bestimmung der Klebkraft im T-Peel erfolgt bei einem Prüfklima von 23 °C +/- 1 °C Temperatur und 50 % +/- 5 % rel. Luftfeuchte. Grundsätzlich wird ein zweischichtiger Verbund hergestellt, und die Klebkraft (oder Trennkraft) dieses Verbunds gemessen durch Abziehen in einer Geometrie, die von der Seite betrachtet einem liegenden "T" ähnelt.

Im Folgenden soll die Erfindung anhand mehrerer Beispiele näher erläutert werden, ohne damit eine wie auch immer geartete Einschränkung hervorrufen zu wollen.

Im Rahmen von Tests wurde nach optimalen Parametern der Coronavorbehandlung zur Verankerung von PET und Polyester sowie diversen acrylatbasierenden Klebmassen gesucht. Für eine Reinacrylatmasse konnten jedoch in keinem Fall Zustände erzeugt werden, bei denen die Klebmasse in das kohäsive Versagen ging.

Die Zusammensetzung der Reinacrylatmasse (ein Beispiel für eine typische Acrylatmasse) lautet:

| | |
|---|---|
| 2-Ethylhexylacrylat | 68 Gew.-% |
| Isobornylacrylat | 30 Gew.-% |
| Acrylsäure | 2 Gew.-% |

Dazu kommen 0,4 Gew.-% Al-Chelat (bezogen auf die obigen 100 %).

Während in den Versuchen mit Coronavorbehandlung des Trägers sich maximale Abzugskräfte von 6,6 N/cm im T-Peel einstellten, wurden bei der Plasmalamination Kohäsionsbrüche der Klebemasse erzielt. Die Werte für ein Kohäsionsversagen der Klebmasse liegen in diesem Fall bei 8,3 N/cm.

Wurde nur die Polyesterfolie mit dem System der Plasmalamination behandelt und die Klebmasse unbehandelt per Hand hinzukaschiert, so konnte die Verankerungskraft von 3,2 N/cm mit Corona auf 4,3 N/cm mittels des erfindungsgemäßen Verfahrens gesteigert werden.

### Ergebnisse:

| Legende | F-vorMW-b N/cm | Fmittel Lm N/cm | Breite mm | Muster Bem. | Bruchart |
|---|---|---|---|---|---|
| | 8,05 | 8,29 | 25 | Argon | Kohäsionsbruch |
| | 8,19 | 8,46 | 25 | Luft | Kohäsionsbruch |
| | 4,14 | 4,27 | 25 | Luft Folie | Adhäsionsbruch |

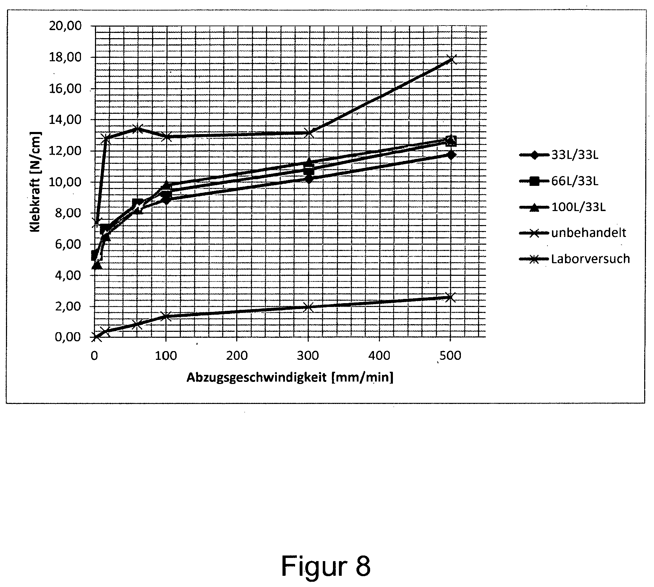

Für weitere Tests wurden an einem schon zuvor auf der Corona optimierten Träger/Klebmassesystem Untersuchungen durchgeführt. Bei dem Träger handelt es sich um eine ungeschäumte Acrylatmasse (900 µm Dicke), bei der Klebemasse um eine Reinacrylatmasse (Auftrag auf Träger mit 50 g/m²). In der vorgezeigten Graphik (siehe Figur 8) ist der Versuch "Laborversuch" auf dem erfindungsgemäßen System zur Plasmalamination erfolgt. Geprüft wurde im T-Peel mit verschiedenen Abzugsgeschwindigkeiten im Bereich von 3 bis 500 mm/min. Es ist eine deutliche Steigerung gegenüber den Coronabehandlungen ersichtlich. Besonders im Bereich niedriger Abzugsgeschwindigkeiten konnte die Performance um teils bis zu 100 % gesteigert werden. Unter bestimmten Umständen und langsamen Abzugsgeschwindigkeiten konnten auch größere Ausrisse aus dem Kern beobachtet werden, was im Fall der Coronavorbehandlung nicht möglich war.

Die Bezeichnung 33L/33L steht dabei für eine Coronabehandlung der Oberfläche des Trägers und der Oberfläche der Klebemasse, die zusammenlaminert werden, mit Luft ("L"), und zwar werden die Oberflächen mit jeweils mit 33 W*min/m² ("33") behandelt. Analog gilt dies für die folgenden zwei Graphen.

## Patentansprüche

1. Verfahren zur Erhöhung der Adhäsion zwischen der ersten Oberfläche eines ersten bahnförmigen Materials und einer ersten Oberfläche eines zweiten bahnförmigen Materials, wobei
das erste bahnförmige Material und das zweite bahnförmige Material kontinuierlich und mit gleicher Bahnrichtung einem Laminierspalt zugeführt werden, in dem das erste bahnförmige Material und das zweite bahnförmige Material mit jeweils ihrer ersten Oberfläche zusammenlaminiert werden,
beide erste Oberflächen des ersten bahnförmigen Materials und des zweiten bahnförmigen Materials vollflächig mit einem Plasma behandelt werden, und zwar derart, dass das Plasma beginnend vor dem Laminierspalt bis in den Laminierspalt hinein kontinuierlich auf die beiden ersten Oberflächen einwirkt,
der Laminierspalt von einer Druckwalze und einer Gegendruckwalze gebildet wird und zumindest eine der Oberflächen der Walzen oder beide mit einem Dielektrikum ausgerüstet sind,
wobei das erste bahnförmige Material aus einer Haftklebemassenschicht besteht, wobei die Haftklebemassenschicht aus reinem Acrylat oder mehrheitlich aus Acrylat besteht, und
die Haftklebemassenschicht ein trägerloses, einschichtiges, beidseitig klebendes Klebeband bildet.

2. Verfahren nach Anspruch 1,
**dadurch gekennzeichnet, dass**
ein beliebiger Punkt auf der mit Plasma behandelten Oberfläche des ersten bahnförmigen Materials und/oder des zweiten bahnförmigen Materials den Weg vom Beginn der Plasmabehandlung bis in den Laminierspalt in einer Zeitspanne von weniger als 2,0 s zurücklegt.

3. Verfahren nach Anspruch 1 oder 2,
**dadurch gekennzeichnet, dass**
ein drittes bahnförmiges Material dem Laminierspalt so zugeführt wird, dass das zweite bahnförmige Material zwischen erstem und drittem bahnförmigen Material liegt.

4. Verfahren nach zumindest einem der Ansprüche 1 bis 3,
**dadurch gekennzeichnet, dass**
dem Laminierspalt neben dem ersten und dem zweiten bahnförmigen Material eine Vielzahl von weiteren bahnförmigen Materialien zugeführt werden, wobei Zuführung so erfolgt, dass die einzelnen bahnförmigen Materialien zwischen dem ersten und dem zweiten bahnförmigen Material in den Laminierspalt eintreten, und die einzelnen weiteren bahnförmigen Materialien so gewählt werden, dass in dem Laminierspalt nie eine nichtklebende Trägerschicht und eine zweite nichtklebende Trägerschicht direkt aufeinander laminiert werden.

5. Verfahren nach zumindest einem der vorherigen Ansprüche,
**dadurch gekennzeichnet, dass**
die Walzen einen Durchmesser zwischen 50 bis 500 mm aufweisen.

6. Verfahren nach zumindest einem der vorherigen Ansprüche,
**dadurch gekennzeichnet, dass**
für das Dielektrikum eine Schicht aus Keramik, Glas, Kunststoff, Gummi oder Silikon gewählt wird.

7. Verfahren nach zumindest einem der vorherigen Ansprüche,
**dadurch gekennzeichnet, dass**
die Dicke der Schicht des Dielektrikums auf der oder den Walzen zwischen 1 bis 5 mm beträgt.

8. Verfahren nach zumindest einem der vorherigen Ansprüche,
**dadurch gekennzeichnet, dass**
das Plasma zwischen einer oder mehrerer Düsen und den Walzen erzeugt wird, bevorzugt bei Betrieb mit Druckluft oder N₂.

9. Verfahren nach zumindest einem der vorherigen Ansprüche,
**dadurch gekennzeichnet, dass**
das Plasma mittels einer Linearelektrode mit Gasaustrittsöffnung erzeugt wird, vorzugsweise einer solchen, die sich über die gesamte Länge des Laminierspalts erstreckt und die weiter vorzugsweise über die gesamte Länge des Laminierspalts einen konstanten Abstand zum Laminierspalt hat.

10. Verfahren nach zumindest einem der vorherigen Ansprüche,
**dadurch gekennzeichnet, dass**
der Behandlungsabstand des Plasmaerzeugers zum Laminierspalt 1 bis 100 mm, bevorzugt 3 bis 50 mm, besonders bevorzugt 4 bis 20 mm beträgt.

11. Verfahren nach zumindest einem der vorherigen Ansprüche,
**dadurch gekennzeichnet, dass**
der Plasmaerzeuger senkrecht zu der Ebene, die ihrerseits senkrecht zu der von den Walzenachsen aufgespannten Ebene liegt, in der Höhe verschoben werden kann.

12. Verfahren nach zumindest einem der vorherigen Ansprüche,
**dadurch gekennzeichnet, dass**
die Geschwindigkeit, mit der die Bahnen in den Laminierspalt geführt werden, zwischen 0,5 bis 200 m/min, bevorzugt zwischen 1 bis 50 m/min, besonders bevorzugt zwischen 2 bis 20 m/min liegt.

13. Verfahren nach zumindest einem der vorherigen Ansprüche,
**dadurch gekennzeichnet, dass**
das zweite bahnförmige Material ein Trägermaterial ist.

14. Verfahren nach zumindest einem der vorherigen Ansprüche,
**dadurch gekennzeichnet, dass**
das dritte bahnförmige Material eine Klebemassensicht aufweist, die derart in dem dritten bahnförmigen Material angeordnet ist, dass diese äußere Oberfläche des dritten bahnförmigen Material bildet und diese mit dem zweiten bahnförmigen Material zusammenlaminiert wird.

15. Verfahren nach zumindest einem der vorherigen Ansprüche,
**dadurch gekennzeichnet, dass**
die Dicke der Haftklebemassenschicht ≥ 20 µm, bevorzugt ≥ 100 µm, ganz besonders bevorzugt ≥ 300 µm ist und/oder maximal ≤ 2500, bevorzugt ≤1500 µm, weiter bevorzugt ≤ 1000 µm ist.

## Claims

1. Method for increasing the adhesion between the first surface of a first web-type material and a first surface of a second web-type material, wherein
the first web-type material and the second web-type material are fed continuously and with identical web direction to a laminating gap, in which the first web-type material and the second web-type material are laminated together each by their first surface, both first surfaces of the first web-type material and of the second web-type material are treated over the full area with a plasma, specifically such that the plasma, beginning ahead of the laminating gap on into the laminating gap, acts continuously on the two first surfaces,
the laminating gap is formed by a pressure roll and a counter-pressure roll, and at least one of the surfaces of the rolls, or both, is or are furnished with a dielectric,
wherein the first web-type material consists of a layer of pressure-sensitive adhesive,
wherein the layer of pressure-sensitive adhesive consists of pure acrylate or predominantly of acrylate, and
the layer of pressure-sensitive adhesive forms a carrier-free, single-layer, double-sided adhesive tape.

2. Method according to Claim 1,
**characterized in that**
an arbitrary point on the plasma-treated surface of the first web-type material and/or of the second web-type material travels the path from the start of the plasma treatment on into the laminating gap in a timespan of less than 2.0 s.

3. Method according to Claim 1 or 2,
**characterized in that**
a third web-type material is fed to the laminating gap in such a way that the second web-type material lies between the first and third web-type materials.

4. Method according to at least one of Claims 1 to 3, **characterized in that**
the laminating gap is fed not only with the first and second web-type materials but also with a multiplicity of further web-type materials, with feeding taking place in such a way that the individual web-type materials enter the laminating gap between the first and second web-type materials, and the individual further web-type materials are selected such that in the laminating gap a non-adhesive carrier layer and a second non-adhesive carrier layer are never laminated directly to one another.

5. Method according to at least one of the preceding claims,
**characterized in that**
the rolls have a diameter between 50 to 500 mm.

6. Method according to at least one of the preceding claims,
**characterized in that**
for the dielectric a layer of ceramic, glass, plastic, rubber or silicone is selected.

7. Method according to at least one of the preceding claims,
**characterized in that**
the thickness of the layer of the dielectric on the roll or rolls is between 1 to 5 mm.

8. Method according to at least one of the preceding claims,
**characterized in that**
the plasma is generated between one or more nozzles and the rolls, preferably on operation with compressed air or N₂.

9. Method according to at least one of the preceding claims,
**characterized in that**
the plasma is generated by means of a linear electrode with gas exit opening, preferably one which extends over the entire length of the laminating gap and which further preferably has a constant distance from the laminating gap over the entire length of the laminating gap.

10. Method according to at least one of the preceding claims,
**characterized in that**
the treatment distance of the plasma generator from the laminating gap is 1 to 100 mm, preferably 3 to 50 mm, more preferably 4 to 20 mm.

11. Method according to at least one of the preceding claims,
**characterized in that**
the plasma generator can be displaced in its height perpendicularly to the plane which in turn lies perpendicular to the plane defined by the roll axes.

12. Method according to at least one of the preceding claims,
**characterized in that**
the speed with which the webs are fed into the laminating gap is between 0.5 to 200 m/min, preferably between 1 to 50 m/min, more preferably between 2 to 20 m/min.

13. Method according to at least one of the preceding claims,
**characterized in that**
the second web-type material is a carrier material.

14. Method according to at least one of the preceding claims,
**characterized in that**
the third web-type material has a layer of adhesive which is arranged in the third web-type material in such a way that it forms outer surface of the third web-type material and it is laminated together with the second web-type material.

15. Method according to at least one of the preceding claims,
**characterized in that**
the thickness of the layer of pressure-sensitive adhesive is ≥ 20 µm, preferably ≥ 100 µm, very preferably ≥ 300 µm and/or not more than ≤ 2500, preferably ≤ 1500 µm, more preferably ≤ 1000 µm.

## Revendications

1. Procédé d'augmentation de l'adhérence entre la première surface d'un premier matériau en forme de bande et une première surface d'un deuxième matériau en forme de bande,
le premier matériau en forme de bande et le deuxième matériau en forme de bande étant amenés en continu et avec une direction de bande identique à une fente de laminage dans laquelle le premier matériau en forme de bande et le deuxième matériau en forme de bande sont laminés ensemble avec leur première surface respective, les deux premières surfaces du premier matériau en forme de bande et du deuxième matériau en forme de bande étant traitées sur toute leur surface avec un plasma, et ce telle sorte que le plasma agit en continu sur les deux premières surfaces en commençant avant la fente de laminage jusque dans la fente de laminage,
la fente de laminage étant formée par un rouleau de pression et un rouleau de contre-pression, et au moins l'une des surfaces des rouleaux ou les deux étant équipées d'un diélectrique,
le premier matériau en forme de bande étant constitué d'une couche de masse adhésive de contact,
la couche de masse adhésive de contact étant constituée d'acrylate pur ou majoritairement d'acrylate, et
la couche de masse adhésive de contact formant un ruban adhésif monocouche, sans support, adhésif sur les deux côtés.

2. Procédé selon la revendication 1, **caractérisé en ce qu'**un point quelconque sur la surface traitée au plasma du premier matériau en forme de bande et/ou du deuxième matériau en forme de bande parcourt le trajet du début du traitement au plasma jusque dans la fente de laminage en un laps de temps inférieur à 2,0 s.

3. Procédé selon la revendication 1 ou 2, **caractérisé en ce qu'**un troisième matériau en forme de bande est amené à la fente de laminage de telle sorte que le deuxième matériau en forme de bande se situe entre le premier et le troisième matériau en forme de bande.

4. Procédé selon au moins l'une quelconque des revendications 1 à 3, **caractérisé en ce qu'**une pluralité d'autres matériaux en forme de bande sont amenés à la fente de laminage en plus du premier et du deuxième matériau en forme de bande, l'amenée étant effectuée de telle sorte que les matériaux en forme de bande individuels entrent dans la fente de laminage entre le premier et le deuxième matériau en forme de bande, et les autres matériaux en forme de bande individuels sont choisis de telle sorte qu'une couche de support non adhésive et une deuxième couche de support non adhésive ne sont jamais laminées directement l'une sur l'autre dans la fente de laminage.

5. Procédé selon au moins l'une quelconque des revendications précédentes, **caractérisé en ce que** les rouleaux présentent un diamètre compris entre 50 et 500 mm.

6. Procédé selon au moins l'une quelconque des revendications précédentes, **caractérisé en ce qu'**une couche de céramique, de verre, de plastique, de caoutchouc ou de silicone est choisie pour le diélectrique.

7. Procédé selon au moins l'une quelconque des revendications précédentes, **caractérisé en ce que** l'épaisseur de la couche de diélectrique sur le ou les rouleaux est comprise entre 1 et 5 mm.

8. Procédé selon au moins l'une quelconque des revendications précédentes, **caractérisé en ce que** le plasma est généré entre une ou plusieurs buses et les rouleaux, de préférence en fonctionnement avec de l'air comprimé ou du N₂.

9. Procédé selon au moins l'une quelconque des revendications précédentes, **caractérisé en ce que** le plasma est généré au moyen d'une électrode linéaire avec une ouverture de sortie de gaz, de préférence qui s'étend sur toute la longueur de la fente de laminage et qui a de préférence une distance constante par rapport à la fente de laminage sur toute la longueur de la fente de laminage.

10. Procédé selon au moins l'une quelconque des revendications précédentes, **caractérisé en ce que** la distance de traitement du générateur de plasma par rapport à la fente de laminage est de 1 à 100 mm, de préférence de 3 à 50 mm, de manière particulièrement préférée de 4 à 20 mm.

11. Procédé selon au moins l'une quelconque des revendications précédentes, **caractérisé en ce que** le générateur de plasma peut être déplacé en hauteur perpendiculairement au plan qui est lui-même perpendiculaire au plan défini par les axes des rouleaux.

12. Procédé selon au moins l'une quelconque des revendications précédentes, **caractérisé en ce que** la vitesse à laquelle les bandes sont introduites dans la fente de laminage est comprise entre 0,5 et 200 m/min, de préférence entre 1 et 50 m/min, de manière particulièrement préférée entre 2 et 20 m/min.

13. Procédé selon au moins l'une quelconque des revendications précédentes, **caractérisé en ce que** le deuxième matériau en forme de bande est un matériau de support.

14. Procédé selon au moins l'une quelconque des revendications précédentes, **caractérisé en ce que** le troisième matériau en forme de bande présente une couche de masse adhésive qui est agencée dans le troisième matériau en forme de bande de telle sorte que celle-ci forme une surface extérieure du troisième matériau en forme de bande et que celle-ci est laminée avec le deuxième matériau en forme de bande.

15. Procédé selon au moins l'une quelconque des revendications précédentes, **caractérisé en ce que** l'épaisseur de la couche de masse adhésive de contact est ≥ 20 µm, de préférence ≥ 100 µm, de manière tout particulièrement préférée ≥ 300 µm et/ou est au maximum ≤ 2 500, de préférence ≤ 1 500 µm, de manière davantage préférée ≤ 1 000 µm.
